# EUROPEAN PATENT APPLICATION

(11) **EP 4 557 121 A1**
(43) Date of publication of application: **21.05.2025**
(21) Application number: 23839812.7
(22) Date of filing: 14.06.2023
(51) Int. Cl.: G06F 16/27, G06F 16/23, H04L 67/1097

(54) **INTER-SHARD TRANSACTION SYSTEM AND METHOD CAPABLE OF PERFORMING VERIFICATION IN BLOCKCHAIN NETWORK**

(30) Priority: 12.07.2022 KR 20220085703
(71) Applicant: Bloom Technology, Inc., Seongnam-si, Gyeonggi-do 13487 (KR)
(72) Inventor: JOO, Young Hyun, Yongin-si Gyeonggi-do 16862 (KR)
(74) Representative: Murgitroyd & Company
(86) International application number: PCT/KR2023/008164
(87) International publication number: WO 2024/014718

(57) **Abstract**

The present invention relates to an inter-shard transaction system and method capable of verifying the legitimacy of an inter-shard transaction in the inter-shard transaction between accounts belonging to different shards (working shards) in a blockchain network to which dynamic sharding technology is applied. In an inter-shard transaction system capable of performing verification in a node configured to manage a first transmission account performing a first transaction between the first transmission account and a first reception account according to an aspect of the present invention, the node includes a transaction generation unit that generates the first transaction, a transaction request unit that requests the first transaction from a reception node configured to manage the first reception account, a transaction verification information calculation unit that calculates first transaction verification information for verifying the first transaction in a world round state chain including the first transaction information, and a transaction verification information transmission unit that transmits the first transaction verification information to a reception node.

## Description

### [TECHNICAL FIELD]

The present invention relates to an inter-shard transaction verification system and method capable of verifying inter-shard transactions in a blockchain network, and more specifically, to an inter-shard transaction system and method capable of verifying the legitimacy of an inter-shard transaction in the inter-shard transaction between accounts belonging to different shards (working shards) in a blockchain network to which dynamic sharding technology is applied.

### [BACKGROUND ART]

Blockchain is a decentralized distributed transaction management technology that emerged to break away from the traditional centralized method in which a centralized institution stores transaction details at a single point. Blockchain is a distributed ledger system that prevents the forgery or modification of records, where all participants in a P2P (Peer-to-Peer) communication network own a shared ledger determined by a consensus algorithm. In other words, a distributed ledger system is a system in which each node synchronizes and maintains a database called a ledger in a distributed environment without the control of a central administrator.

For all nodes in a blockchain to maintain a synchronized ledger, all transactions and blocks generated in the network must be stored. Conventionally, all messages were propagated to all nodes in the blockchain network using a flooding method. However, this entails a scalability problem, as all nodes are required to receive and store every message.

Recently, the sharding method has been proposed in the blockchain field, which distributes multiple nodes across multiple shard groups and partitions transactions among shards for parallel processing. Sharding is a method that divides transactions and blocks occurring in a blockchain network into small groups called shards, so that nodes in each shard process only their own shard's transactions and blocks without having to process those of other shards, thereby increasing transaction throughput and reducing the size of the distributed ledger in the entire network.

However, as sharding is introduced, the number of nodes responsible for transaction verification decreases in proportion to the number of shards, thereby increasing the risk of data manipulation through consensus attacks by malicious nodes. A consensus attack is one of the most dangerous types of attacks on blockchains. In blockchains, a verification committee, which includes multiple nodes, verifies blocks based on the consensus of the majority of the committee, and blocks that fail to reach consensus are discarded and removed from the chain.

In a typical blockchain, tens of thousands to hundreds of thousands of nodes are included in the verification committee, making it practically impossible for malicious nodes to occupy more than half. However, when sharding techniques are introduced, since the frequency of transactions, the number of nodes, and the ratio of validators differ for each shard, an imbalance may occur between shards over time, which may cause the stability of some shards to become vulnerable. In other words, there may be cases where malicious nodes occupy more than half in some shards, and if the number of malicious nodes exceeds half, there is a risk of false blocks being connected to the chain. That is, when the sharding technique is applied, the number of nodes that an attacker must capture is reduced, making it easier to capture more than half of the nodes, which increases the risk of false blocks being connected to the chain.

To solve this problem, even after a shard has been determined, it is necessary to rearrange the members (nodes) of each shard to maintain balance between shards. In addition, if the overall traffic of the blockchain network increases, it is necessary to increase the number of shards. The applicant proposes a dynamic sharding technique that rebalances the members of shards and increases the number of shards.
Typically, in a blockchain network that applies sharding technology, the validity of a transaction can be verified by checking the transaction block (ledger) of the transmission account, which is agreed upon and shared within the shard. In intra-shard transaction communication between accounts in the same shard, the reception account shares the transaction block of the transmission account since both belong to the same shard, allowing the reception account to verify the transaction's validity. However, in inter-shard transaction communication between accounts in different shards, the reception account does not share the transaction block of the transmission account because they belong to different shards, preventing the reception account from verifying the transaction's validity, which poses a problem.

### [DETAILED DESCRIPTION OF INVENTION]

### [TECHNICAL PROBLEMS]

An object of the present invention is to solve the above problem, and to provide an inter-shard transaction system and method enabling a reception account to verify the legitimacy of a transaction when inter-shard transaction communication is performed between accounts belonging to different shards in a blockchain network to which sharding technology is applied.

### [TECHNICAL SOLUTION]

The present disclosure can be implemented in various ways, including a device (system), a method, a computer program stored in a computer-readable medium, or a computer-readable medium having a computer program stored therein.

According to an aspect of the present invention, there is provided an inter-shard transaction system capable of performing verification in a node configured to manage a first transmission account performing a first transaction between the first transmission account and a first reception account in a blockchain network, wherein the node includes a transaction generation unit configured to generate the first transaction; a transaction request unit configured to request the first transaction from a reception node configured to manage the first reception account; a transaction transmission list management unit configured to record and manage first transaction information in a transaction transmission list; a transaction verification information calculation unit configured to calculate first transaction verification information for verifying the first transaction in a world round state chain including the first transaction information; and a transaction verification information transmission unit configured to transmit the first transaction verification information to a node belonging to a reception shard of the first transaction.

More preferably, the node further includes a transaction completion reception unit configured to receive a transaction completion message for the first transaction,

More preferably, the transaction transmission list management unit completes the first transaction in the transaction transmission list based on the transaction completion message for the first transaction.

More preferably, the transaction request unit acquires home shard information of the first reception account, acquires working shard information of the first reception account from a node belonging to a home shard of the first reception account, and requests the first transaction from the reception node based on the working shard information of the first reception account.

More preferably, the node is a verification confirmation node of a second transaction between a second transmission account and a second reception account, and the node further includes the transaction transmission list management unit configured to record and manage the second transaction information in the transaction transmission list, a transaction verification request reception unit configured to receive a verification request for the second transaction from the node belonging to the reception shard of the second transaction, the transaction verification information calculation unit configured to calculate second transaction verification information for verifying the second transaction in the world round state chain including information for the second transaction; and the transaction verification information transmission unit configured to transmit the second transaction verification information to the node belonging to the reception shard of the second transaction.

More preferably, the node further includes a transaction request transfer unit configured to transmit the second transaction.

More preferably, the node further includes a transaction completion reception unit configured to receive a transaction completion message for the second transaction.

More preferably, the transaction transmission list management unit completes the second transaction in the transaction transmission list based on the transaction completion message for the second transaction.

More preferably, the node is a reception node configured to manage a third reception account for performing a third transaction between a third transmission account and the third reception account, and the node further includes a transaction request reception unit configured to receive a third transaction request from a transmission node configured to manage the third transmission account; a transaction reception list management unit configured to record and manage the third transaction information in a transaction reception list; a transaction verification information reception unit configured to receive verification information for the third transaction from a node belonging to the transmission shard of the third transaction; a transaction verification unit configured to apply the verification information for the third transaction to the world round state chain to verify the third transaction; a transaction processing unit configured to register the verified third transaction in a transaction chain of the third reception account; and a transaction completion transmission unit configured to transmit a third transaction completion message for the third transaction registered in the transaction chain to the node belonging to the transmission shard of the third transaction.

More preferably, the transaction reception list management unit changes status information of the third transaction recorded in the transaction reception list when the transaction verification unit completes verification of the third transaction or the transaction processing unit registers the third transaction in the transaction chain.

More preferably, the node is a verification request node of a fourth transaction between a fourth transmission account and a fourth reception account, and the node further includes a transaction reception list management unit configured to record and manage the fourth transaction information in the transaction reception list; a transaction verification request transmission unit configured to request the node belonging to the transmission shard of the fourth transaction to verify the fourth transaction; a transaction verification information reception unit configured to receive verification information for the fourth transaction from the node belonging to the transmission shard of the fourth transaction; and a transaction verification unit configured to apply the verification information for the fourth transaction to the world round state chain to verify the fourth transaction.

More preferably, the node further includes a transaction request transfer unit configured to transfer the fourth transaction.

More preferably, the inter-shard transaction system further includes a transaction completion transfer unit configured to receive a fourth transaction completion message from the reception node of the fourth transaction and transmit the fourth transaction completion message to the node belonging to the transmission shard of the fourth transaction.

More preferably, the transaction reception list management unit changes status information of the fourth transaction recorded in the transaction reception list when the transaction verification unit completes the verification of the fourth transaction or the transaction completion transfer unit receives the fourth transaction completion message.

According to another aspect of the present invention, there is provided an inter-shard transaction method capable of performing verification implemented by at least one processor in a node configured to manage a first transmission account performing a first transaction between the first transmission account and a first reception account, the inter-shard transaction method including: generating, by the node, a first transaction; requesting, by the node, the first transaction from the reception node configured to manage the first reception account; recording and managing, by the node, first transaction information in a transaction transmission list; calculating, by the node, first transaction verification information for verifying the first transaction in a world round state chain including the first transaction information; and transmitting, by the node, the first transaction verification information to nodes belonging to a reception shard of the first transaction.

More preferably, the inter-shard transaction method capable of performing verification in a blockchain network further includes receiving, by the node, a transaction completion message for the first transaction.

More preferably, the inter-shard transaction method capable of performing verification in a blockchain network further includes completing, by the node, the first transaction in the transaction transmission list based on the transaction completion message for the first transaction.

More preferably, the requesting, by the node, for the first transaction from the reception node configured to manage the first reception account includes acquiring home shard information of the first reception account, acquiring working shard information of the first reception account from a node belonging to the home shard of the first reception account, and requesting the first transaction from the reception node based on the working shard information of the first reception account.

More preferably, the node is a verification confirmation node of a second transaction between a second transmission account and a second reception account, and the inter-shard transaction method further includes: recording and managing, by the node, the second transaction information in the transaction transmission list; receiving, by the node, a verification request for the second transaction from the nodes belonging to the reception shard of the second transaction; calculating, by the node, second transaction verification information for verifying the second transaction in the world round state chain including information for the second transaction; and transmitting, by the node, the second transaction verification information to the nodes belonging to the reception shard of the second transaction.

More preferably, the inter-shard transaction method capable of performing verification in a blockchain network further includes transferring, by the node, the second transaction.

More preferably, the inter-shard transaction method capable of performing verification in a blockchain network further includes receiving, by the node, a transaction completion message for the second transaction.

More preferably, the inter-shard transaction method capable of performing verification in a blockchain network further includes completing, by the node, the second transaction in the transaction transmission list based on the transaction completion message for the second transaction.

More preferably, the node is a reception node configured to manage the third reception account performing a third transaction between a third transmission account and a third reception account, and the inter-shard transaction method includes: receiving, by the node, a third transaction request from a transmission node configured to manage the third transmission account; recording and managing, by the node, the third transaction information in the transaction reception list; receiving, by the node, verification information for the third transaction from the node belonging to the transmission shard of the third transaction; applying, by the node, the verification information for the third transaction to the world round state chain to verify the third transaction; registering, by the node, the verified third transaction, in a transaction chain of the third reception account; and transmitting, by the node, a third transaction completion message for the third transaction registered in the transaction chain to the node belonging to the transmission shard of the third transaction.

More preferably, the inter-shard transaction method capable of performing verification in a blockchain network further includes: changing, by the node, status information of the third transaction recorded in the transaction reception list, when the verification of the third transaction is completed or the third transaction is registered in the transaction chain.

More preferably, the node is a verification request node of a fourth transaction between a fourth transmission account and a fourth reception account, and the method further includes recording and managing, by the node, the fourth transaction information in the transaction reception list; requesting, by the node, the node belonging to the transmission shard of the fourth transaction to verify the fourth transaction; receiving, by the node, verification information for the fourth transaction from the node belonging to the transmission shard of the fourth transaction; and applying, by the node, the verification information for the fourth transaction to the world round state chain to verify the fourth transaction.

More preferably, the inter-shard transaction method capable of performing verification in a blockchain network further includes transferring, by the node, the fourth transaction.

More preferably, the inter-shard transaction method capable of performing verification in a blockchain network further includes: receiving, by the node, the fourth transaction completion message from the reception node of the fourth transaction and transmitting the fourth transaction completion message to the node belonging to the transmission shard of the fourth transaction.

More preferably, the inter-shard transaction method capable of performing verification in a blockchain network further includes changing, by the node, status information of the fourth transaction recorded in the transaction reception list when the verification of the fourth transaction is completed or the fourth transaction completion message is received.

### [EFFECT OF INVENTION]

According to the present disclosure, the following effects are achieved.

By dividing a blockchain network into shard units to process transactions and blocks, the present disclosure can reduce the transaction processing volume and the size of the distributed ledger, which increases the scalability of the blockchain network.

By introducing the concept of a home shard and a working shard, enabling the home shard information of an arbitrary account to be derived by computation, storing information of the working shard, which is the shard to which the account currently belongs, in the home shard of the account, and updating the changed working shard information in the home shard of the account when an arbitrary account changes the working shard, the present disclosure enables the tracking of the working shard of the account even when the account moves between the working shards.

According to the present invention, a transaction transmission side account can acquire working shard information of a reception side account through a home shard of the reception side account, thereby supporting an inter-shard transaction between any two accounts.

According to the present invention, the reception account management node can verify the legitimacy of the transaction in an inter-shard transaction between any two accounts, and the transmission account management node can verify that the transaction has been normally registered in the reception account.

The effects of the present disclosure are not limited to those mentioned above, and other effects not mentioned can be clearly understood from the description of the claims by a person having ordinary knowledge in the art to which the present disclosure pertains (hereinafter referred to as "those skilled in the art").

### [BRIEF DESCRIPTION OF THE DRAWING]

Embodiments of the present disclosure will be described with reference to the accompanying drawings, in which like reference numerals represent like components, but the present is not limited thereto.
FIG. 1 is a diagram illustrating a conceptual diagram of a blockchain network divided into three shards according to the present disclosure.
FIG. 2 is a block diagram illustrating an exemplary configuration of a node including a transaction system of an account according to the present disclosure.
FIG. 3 is a diagram illustrating information stored in a data storage of each node to implement an inter-shard transaction system capable of performing verification of the present invention.
FIG. 4 is a diagram illustrating an example of a blockchain network in which a verifiable inter-shard transaction is implemented according to the present invention.
FIG. 5 is a configuration diagram illustrating an inter-shard transaction system capable of performing verification according to an embodiment of the present invention.
FIG. 6 is a block diagram illustrating a driving module as a transmission node of the present invention.
FIG. 7 is a block diagram illustrating a driving module as a verification confirmation node of the present invention.
FIG. 8 is a block diagram illustrating a driving module as the reception node of the present invention.
FIG. 9 is a block diagram illustrating a driving module as a verification request node of the present invention.
FIG. 10 is an operational flow diagram illustrating an inter-shard transaction method capable of performing verification according to a first embodiment of the present invention.
FIG. 11 is an operational flow diagram illustrating an inter-shard transaction method capable of performing verification according to a second embodiment of the present invention.

Embodiments of the present disclosure will be described with reference to the accompanying drawings, in which like reference numerals represent like components, but the present disclosure is not limited thereto.

### [DESCRIPTION OF REFERENCE NUMERALS]

222: Inter-shard transaction system
224: Account management module
226: Peer-to-peer communication module
228: Transaction consensus module
230: Home shard output module
232: Transaction processing module
234: Transaction verification module

### [BEST MODE FOR CARRYING OUT THE INVENTION]

Hereinafter, specific details for implementing the present disclosure will be described in detail with reference to the accompanying drawings. However, in the following description, specific descriptions of widely known functions or configurations will be omitted if they may unnecessarily obscure the gist of the present disclosure.

In the accompanying drawings, identical or corresponding components are given the same reference numerals. In addition, in the following description of the embodiments, duplicate description of identical or corresponding components may be omitted. However, the omission of the description of a component does not intend that such a component is not included in any embodiment.

The advantages and features of the embodiments disclosed in the present specification, and the methods for achieving them, will become apparent by referring to the embodiments described below in conjunction with the accompanying drawings. However, the present disclosure is not limited to the embodiments disclosed below, but may be implemented in various different forms, and these embodiments are only provided to fully inform those skilled in the art related to the present disclosure of the scope of the present disclosure.

Unless otherwise defined, all terms (including technical and scientific terms) used in the present specification may be used with a meaning that can be commonly understood by those skilled in the art to which the present disclosure pertains. In addition, terms defined in commonly used dictionaries should not be ideally or excessively interpreted unless explicitly specifically defined.

For example, the term "technique" may refer to systems, methods, computer-readable instructions, modules, algorithms, hardware logic, and/or operations as permitted by the context described above and throughout the entire document.

The terms used in the present specification will be briefly explained, followed by a detailed description of the disclosed embodiments. The terms used in the present specification have been selected from widely used general terms as much as possible while considering the functions in the present disclosure, but this may vary depending on the intention of engineers engaged in the relevant field, precedents, or the emergence of new technologies. In addition, in certain cases, there are terms arbitrarily selected by the applicant, and in this case, the meanings thereof will be described in detail in the relevant description of the disclosure. Therefore, the terms used in the present disclosure should be defined based on the meanings of the terms and the overall contents of the present disclosure, rather than simply the names of the terms.

In the present specification, singular expressions include plural expressions unless the context clearly specifies that they are singular. In addition, plural expressions include singular expressions unless the context clearly specifies that they are plural. Throughout the specification, when a part is described as including a certain component, this means that, unless explicitly stated otherwise, other components are not excluded and may also be included.

In the present disclosure, terms such as "include," "comprising," and the like may indicate the presence of features, operations, elements, and or components, but do not exclude the possibility of the addition of one or more other functions, operations, elements, components, and/or combinations thereof.

In the present disclosure, when a specific component is referred to as being "coupled," "combined," "connected," "associated," or "reacting" with any other component, the specific component may be directly coupled, combined, connected, and/or associated with, or reacting with, the other component, but the present disclosure is not limited thereto. For example, one or more intermediate components may exist between the specific component and the other component. Furthermore, "and/or" in the present disclosure may include each of one or more items listed or a combination of at least some of the one or more items listed.

In the present disclosure, terms such as "first", "second", etc. are used to distinguish specific components from other components, and such terms do not limit the components described. For example, a "first" component may be used to refer to a component identical or similar in form to a "second" component.

In the present disclosure, a 'blockchain network' refers to a group of multiple computers (nodes) that participate in a blockchain system and communicate with each other peer-to-peer via the Internet, etc., and a 'node' in the present disclosure may be a computer that participates in the blockchain network. Here, computer is a comprehensive term for all devices having CPU, memory, communication, and input/output functions, and specifically may include a server computer, a personal computer (PC), a mobile phone terminal, a small home appliance, etc.

Nodes can share and spread information through the blockchain network. Nodes manage user accounts. Accounts managed by nodes may include accounts of node owners (hereinafter referred to as host accounts) and accounts entrusted for management by other users (hereinafter referred to as guest accounts). A node may store all information about host accounts and guest accounts it manages, transmit them to other nodes in the blockchain network, and receive updated information about host accounts and guest accounts managed by each of the other nodes.

In the present disclosure, the term "account" refers to a user account participating in a blockchain, and may be a data structure representing a user. An account may add information to a blockchain system by issuing transaction, and may be a linked list of transactions issued by the user. The transaction may be a unit of data added to the system by the user. The account may own a node to directly manage its own transaction information, and such an account may be referred to as a host account. Alternatively, an account may entrust another user's node to manage its transaction information, and such an account may be referred to as a guest account, and the node entrusted with account management may be referred to as a delegate node. Node and account authentication may be performed using an encryption key, and transactions may be signed using the same encryption key. A guest account may operate a node by itself to become a host account, or may change its delegate node, and a host account may select a delegate node to become a guest account.

In the present disclosure, a "transaction" refers to a unit of information added to the blockchain, which can be issued by one account alone. The content of a transaction is nominally arbitrary information provided by a user, and may actually be a meaningful message within the system. For example, a transaction may include messages such as "Account A sent 100 coins to Account B", "Account B received 100 coins from Account A", etc. In the present disclosure, the serial numbers of the transaction start from 0 and increase by 1 for each transaction, and an Account-Wise Transaction Chain (AWTC) that manages a ledger for each account is used. The technology for the Account-Wise Transaction Chain (AWTC) can be understood by referring to the contents described in Korean Patent Application Publication No. 2021-0015196.

In the present invention, an account that requests a transaction may be called a transmission account, an account that is a target of a transaction request may be called a reception account, a node that manages a transmission account may be called a transmission node, and a node that manages a reception account may be called the reception node.

In the present invention, a "block" may be a signed list of transactions added to a shard or blockchain network during a specific period of time. In the generated transaction, a block may be generated by signing a list through a consensus algorithm. A block can be generated only once, and a blockchain can be formed by adding a new block to an existing block list.

In the present invention, a "shard" can be a small group of nodes participating in a blockchain network. The entire blockchain network is generally divided into two or more shards, and when the blockchain network is not divided, all nodes are considered to participate in one shard, and each shard has a unique address. Typically, in a blockchain network to which a sharding technique is applied, nodes belonging to the same shard perform peer-to-peer communication with each other, and share an account-wise transaction chain (AWTC) of all accounts belonging to the same shard.

In the present invention, all the accounts may have one working shard and one home shard. The working shard and the home shard of any account may be the same or different from each other. In the present invention, the "home shard" of the account may be calculated based on a function having an address of the account and a total number of shards as parameters. In the present invention, the "working shard" of the account is a shard in which the account currently belongs and operates, and may be a normal shard. That is, in the present invention, the nodes having the same working shards may perform peer-to-peer communication with each other, and share the account-wise transaction chain (AWTC) of all accounts belonging to the same working shard.

In the present invention, the "intra-shard transaction" may mean a transaction between nodes having the same working shard. That is, the transmission node and the reception node of the intra-shard transaction may belong to the same working shard. In the present invention, the "inter-shard transaction" may mean a transaction between nodes belonging to different working shards. That is, the transmission node and the reception node of the inter-shard transaction belong to different working shards.

Each shard may have a set of accounts having the shard as a home shard, and a set of nodes and accounts having the shard as a working shard. Nodes and accounts constituting a blockchain network must belong to one working shard.

The node may move from one working shard to another, and when the node moves from the working shard, a host account and a guest account managed by the node can move from the working shard at the same time. Any account can move from one working shard to another independently of the node.

In the present disclosure, "peer-to-peer communication" in the blockchain network and shards may mean that when a node receives some information, it replicates the received information and transmits it to other nodes, and the node receiving the information also replicates the information and transmits it to other nodes, repeating this process so that after a sufficient period of time, all nodes belonging to the blockchain network and shards share the information.

In the present disclosure, a 'neighboring shard' of a shard may be a shard having an address whose bit distance is 1 from the address of the corresponding shard. A bit distance of 1 means that when comparing two binary values digit by digit, only one digit value is different. For example, for binary value '0101', a binary value that differs only in the 1st digit value is '0100', a binary value that differs only in the 2nd digit value is '0111', a binary value that differs only in the 3rd digit value is '0001', and a binary value that differs only in the 4th digit value is '1101'. Therefore, for binary value '0101', binary value '0100', binary value '0111', binary value '0001', and binary value '1101' are all binary values that differ only in one digit value. In this way, in the present disclosure, a binary value that differs in only one digit for any binary value is defined as having a bit distance of 1, and a shard with an address having a bit distance of 1 from the address of any shard is defined as a neighboring shard.

The operating system described below constitutes one embodiment, but is not intended to limit the scope of the claims to any one particular operating environment. The present disclosure may be applied in other environments without departing from the technical idea and scope of the claimed subject matter.

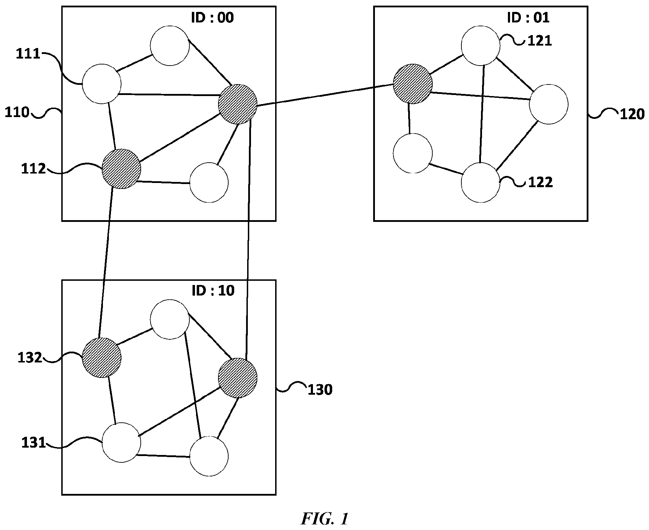

FIG. 1 is a diagram illustrating a conceptual diagram of a blockchain network divided into three shards according to the present disclosure.

A plurality of nodes constituting the blockchain network may be divided into three shards 110, 120, and 130, but the present invention is not limited thereto. The number of shards may increase as the number of nodes and accounts constituting the blockchain network increases, and in this case, one shard may be divided into two. Each of the shards 110, 120, and 130 may be a working shard of nodes belonging to a current shard. All nodes belonging to the current working shard may share the same information.

Each node may include an intra-shard communication node list that stores information on peer-to-peer communication targets (intra-shard communication nodes) among the nodes within the working shard, and an inter-shard communication node list that stores information on peer-to-peer communication targets (inter-shard communication nodes) among the nodes outside the working shard.

The intra-shard communication nodes, which are communication targets within the working shard of each node, may be determined according to a Kademlia rule. The inter-shard communication nodes, which are communication targets outside the working shard of each node, may be randomly determined as some of nodes belonging to the neighboring shard.

Based on the intra-shard communication node list and inter-shard communication node list determined in this way, information sharing through peer-to-peer communication within and outside the working shard becomes possible. A node may have different information to share with the intra-shard communication nodes from information to share with the inter-shard communication nodes. In other words, information shared with the inter-shard communication nodes may be more limited than information shared with the intra-shard communication nodes. The intra-shard communication nodes and inter-shard communication nodes included in the intra-shard communication node list and inter-shard communication node list assigned to each node may be randomly reconfigured.

In FIG. 1, nodes 111, 121, 131 communicating with nodes within the working shard are indicated by unhatched circles, and nodes 112, 122, 132 communicating with nodes outside the working shard are indicated by hatched circles. Nodes 112, 122, 132 communicating with nodes outside the working shard can communicate with nodes belonging to neighboring shards based on the inter-shard communication node list. Here, a neighboring shard may be a shard whose address has a bit distance of 1. A bit distance of 1 may mean that the address of the shard differs only in one digit value. That is, addresses having a bit distance of 1 from address '00' may be '01' and '10'.

In the example of FIG. 1, when the address of a first shard 110 is '00', the address of a second shard 120 is '01', and the address of a third shard 130 is '10', the address '00' of the first shard 110 and the address '01' of the second shard 120 have a bit distance of 1, and the address '00' of the first shard 110 and the address '10' of the third shard 130 have a bit distance of 1. However, the address '01' of the second shard 110 and the address '10' of the third shard 130 are different in two digit values, so that they do not have a bit distance of 1.

Therefore, the first shard and the second shard are neighboring shards, the first shard and the third shard are neighboring shards, and the neighboring shards can communicate directly. However, since the second shard and the third shard are not neighboring shards, the second shard and the third shard cannot communicate directly, and can communicate through the first shard, which is a neighboring shard.

Each node in FIG. 1 includes a shard rebalancing algorithm, and the shard rebalancing algorithm may be executed according to preset conditions. The shard rebalancing algorithm may use the Bounded Cuckoo algorithm, but is not limited thereto. The Bounded Cuckoo algorithm is described in detail in the RapidChain introduction material (see RapidChain: Scaling Blockchain via Full Sharding, https://eprint.iacr.org/2018/460.pdf). In the present disclosure, the health index of shards may be calculated based on the Bounded Cuckoo algorithm to be classified into strong shards and weak shards, and some nodes are periodically randomly extracted from the strong shards and moved to the weak shards.

When the shard rebalancing algorithm is executed, nodes to change their working shards are randomly selected, and the working shards of the nodes may be reallocated and changed. When the working shard of a node is changed, the corresponding node can perform the working shard change procedure for all host accounts and guest accounts that it manages.

In addition, a node may perform individually the working shard change procedure for the host accounts and guest accounts that it manages. For example, when a node changes a guest account, under its delegated management, belonging to a different working shard, the node may perform the working shard change procedure for the corresponding guest account. Alternatively, when a node takes on the delegated management of a third account previously managed by a node belonging to a different working shard, the node may perform the working shard change procedure for the third account.

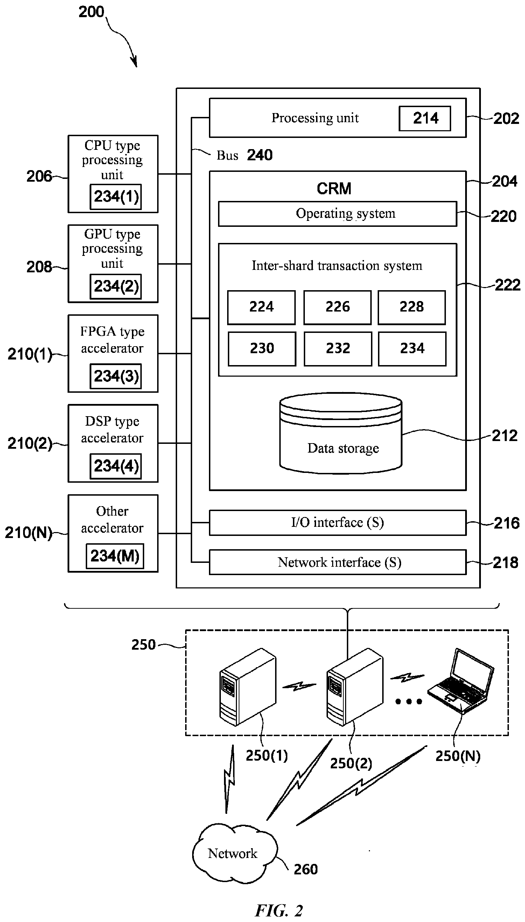

FIG. 2 is a block diagram illustrating an exemplary configuration of a node 200 including a transaction system of an account according to the present disclosure. Each node may be implemented as a computer device.

In some examples, various devices and/or components of the node 200 may include distributed computer resources 250 that can communicate with each other and external devices via one or more networks 260.

In various embodiments, the distributed computer resources 250 may include devices 250(1) to 250(N).

Embodiments of the present disclosure support scenarios in which the distributed computer resources 250 may include one or more computer devices for operating in a cluster or other grouped configuration to share resources, distributing load, increasing performance, or for other purposes.

The distributed computer resources 250 may encompass a variety of device categories, including traditional server-type devices, desktop computer-type devices, mobile devices, special-purpose devices, embedded devices, and/or wearable devices. Thus, although described as desktop and laptop computers, the distributed computer resources 250 may include a variety of device types and are not limited to a particular type of device. The distributed computer resources 250 may be integrated components for inclusion in a desktop computer, a server computer, a web server computer, a personal computer, a mobile computer, a laptop computer, a tablet computer, a wearable computer, an implantable computer, a communication device, an automotive computer, a network-enabled television, a thin client, a terminal, a PDA, a game console, a game device, a workstation, a media player, a personal video recorder (PVR), a set-top box, a camera, or a computing device.

The node 200 may be a single computer device that is a distributed computer resource 250. The node 200 may include any type of computer device having one or more processing units 202 operably connected to computer readable media (CRM) 204 via a bus 240, and in some cases, may include one or more of the above. The bus 240 may include a system bus, a data bus, an address bus, a PCI bus, a mini PCI bus, and various local, peripheral, and/or independent buses.

In the node 200, the processing unit 202 may include, for example, a CPU-type processing unit, a GPU-type processing unit, a field programmable gate array (FPGA), a digital signal processor (DSP), or other hardware logic component that can be driven by a CPU.

For example, such hardware logic components may include application-specific integrated circuits (ASICs), application-specific standard products (ASPs), System-on-a-chip (SOC) systems, complex programmable logic devices (CPLDs), and the like. Specifically, the CRM 204 may store instructions that are executable by an external processing unit, such as an external CPU type processing unit 206, an external GPU type processing unit 208, and/or an external accelerator 210, such as an FPGA type accelerator 210(1), a DSP type accelerator 210(2), or another accelerator 210(N).

The CRM 204 described herein may include computer storage media and/or communication media.

The computer storage media may include any type of storage unit, removable and non-removable computer storage medium, such as volatile memory, non-volatile memory, and/or other permanent or auxiliary computer storage mediums implemented by any method or technology for storage of information such as computer-readable instructions, data structures, program modules or other data.

The computer storage media may be RAM, static RAM (SRAM), dynamic RAM (DRAM), phase change memory (PRAM), read-only memory (ROM), erasable programmable read-only memory (EPROM), electrically erasable programmable read-only memory (EEPROM), flash memory, DVDs, optical storage media, magnetic cassettes, magnetic tape, solid state memory (SSD), etc.

Executable instructions stored in the CRM 204 may include other modules, programs or applications that are loadable and executable by an operating system 220 and the processing unit 202.

Additionally or alternatively, what is functionally described herein may be performed at least in part by one or more hardware logic components, such as an accelerator.

For example, exemplary types of hardware logic components that may be used include field-programmable gate arrays (FPGAs), application-specific integrated circuits (ASICs), application-specific standard products (ASSPs), system-on-a chip system (SOC), complex programmable logic devices (CPLDs), and the like. Further, the accelerator may be a hybrid device of XILINX or ALTERA that includes a CPU embedded in an FPGA fabric.

In the illustrated embodiment, the CRM 204 may also include a data storage 212. In some embodiments, the data storage 212 may include a data storage such as a database, a data warehouse, or other type of structured or unstructured data storage.

In some embodiments, the data storage 212 may include a corpus and/or a relational database having one or more tables that enable data access, such as web tables including one or more HyperText Markup Language (HTML) tables, Resource Description Framework (RDF) tables, Web Ontology Language (OWL) tables, and/or Extensible Markup Language (XML) tables, indexes, stored procedures, etc.

For example, the data storage 212 may store data and/or instructions for the operation of processes, applications, components and/or modules stored in the CRM 204 and executed by the processing unit 202.

The node 200 may further include one or more input/output (I/O) interfaces 216, and the input/output (I/O) interface 216 enables the node 200 to communicate with an input/output device capable of communicating with user input devices including peripheral input devices (for example, a keyboard, a mouse, a pen, a game controller, a voice input device, a touch input device, a gesture input device, and a camera), and peripheral output devices (for example, a display and a printer).

In addition, the node 200 may be a node of a blockchain network and may further include one or more input/output (I/O) network interfaces 218 that enable the node 200 to communicate with other nodes of the blockchain network via the network 260.

The input/output (I/O) network interfaces 218 may include one or more network interface controllers (NICs) or other types of transceiver devices for transmitting and receiving communications over the network 260.

The network 260 may include a public network, such as the Internet, a private network, such as institutional and/or personal intranet, or a combination of private and public networks. The network 260 may include any type of wired and/or wireless network including, but not limited to, a local area network (LAN), a wide area network (WAN), a satellite network, a cable network, a Wi-Fi network, and a WiMax network, a mobile communication network (for example, 3G, 4G, 5G, etc.), or any combination thereof. The network 260 may utilize communication protocols including packet-based and/or datagram-based protocols, such as Internet Protocol (IP), Transmission Control Protocol (TCP), User Datagram Protocol (UDP), or other types of protocols.

Furthermore, the network 260 may include various devices that facilitate network communications or form the hardware foundation for the network, such as switches, routers, gateways, access points, firewalls, base stations, repeaters, and backbone devices.

In some embodiments, the network 260 may further include devices that enable connection to a wireless network, such as a wireless access point (WAP). Embodiments according to the present disclosure may include a WAP that supports the Institute of Electrical and Electronics Engineers (IEEE) 802.11 standard (for example, 802.11g, 802.11n, etc.) to support connection via the WAP that transmits and receives data over various electromagnetic frequencies (for example, radio frequencies).

In the illustrated embodiment, the CRM 204 may include the operating system 220 and an inter-shard transaction system 222. Although the inter-shard transaction system 222 may include one or more modules and/or APIs illustrated as blocks 224, 226, 228, 230 232, and 234, this is merely an example and the number of modules and/or APIs may be greater or smaller. Functions described with respect to the respective blocks 224, 226, 228, 230, 232 and 234 may be combined to be performed by fewer modules and/or APIs, or may be split and performed by a greater number of modules and/or APIs.

Alternatively, some or all of the operating system, data stored in the data storage, and the transaction system of the account may be stored in a separate memory 234, such as memory 214 on the processing unit 202, memory 234(1) on the CPU-type processing unit 206, memory 234(2) on the GPU-type processing unit 208, memory 234(3) on the FPGA-type accelerator 210(1), memory 234(4) on the DSP-type accelerator 210(2), and/or memory 234(M) on other accelerator 210(N).

The inter-shard transaction system 222 may include an account management module 224, a peer-to-peer communication module 226, a transaction consensus module 228, a home shard calculation module 230, a transaction processing module 232, and a transaction verification module 234.

The account management module 224 can manage host accounts and guest accounts. The account management module 224 can receive and store the Account-Wise Transaction Chain (AWTC) for all accounts belonging to the same working shard.

The peer-to-peer communication module 226 can transmit any message generated within the working shard to other nodes within the working shard and to nodes outside the working shard through peer-to-peer communication based on the intra-shard communication node list and the inter-shard communication node list. The peer-to-peer communication module 226 can process messages generated in the node itself or messages shared from other nodes or share the messages with other nodes. This message sharing may be performed across multiple nodes, but for convenience, the procedure for sharing the message will be omitted.

The transaction consensus module 228 selects a consensus target transaction from among the account-wise transaction chains AWTC of all the accounts belonging to the same working shard, combines the selected consensus target transactions into a round state block, agrees upon the combined round state block based on a byzantine fault tolerance (BFT) consensus algorithm, and manages the agreed round state block as a round state chain. The transaction consensus module 228 shares the agreed round state block with nodes belonging to the same working shard so that all the nodes belonging to the working shard have the same round state chain. A technology for allowing the transaction consensus module 228 to select the consensus target transaction from among the account-wise transaction chains of accounts and agree upon the selected consensus target transaction block can be understood with reference to the content described in Korean Patent Publication No. 10-2021-0015196.

In addition, the transaction consensus module 228 combines all round state blocks agreed upon in all working shards in the blockchain network into a world round state block, agrees upon the world round state block after the combination based on a Byzantine fault tolerance consensus algorithm, and manages the agreed world round state block as a world round state chain. The transaction consensus module 228 shares the agreed world round state block with all nodes in the blockchain network so that all the nodes belonging to the blockchain network have the same world round state chain.

In summary, the world round state chain is shared by all the nodes in the blockchain network. The world round state chain includes a plurality of world round state blocks agreed upon in all working shards, each world round state block includes the round state blocks agreed upon in the respective working shards, each round state block includes a transaction chain of all the accounts in the working shard, and the transaction chain of each account includes transaction information executed in each account. Therefore, whether any transaction of any account is legitimate can be verified in all the nodes in the blockchain network based on the information included in the world round state chain. In the present invention, the transmission node provides information for verifying the verification target transaction information in the world round state chain to the reception node, so that the reception node can verify the legitimacy of the verification target transaction from the world round state chain.

The home shard calculation module 230 may calculate a home shard address of any account based on an account address and information about a total number of shards. The home shard calculation module 230 may be driven by the transaction processing module 232, and when the transaction processing module 232 requests the home shard information of the reception account, the home shard calculation module 230 may calculate a home shard address of the reception account by applying to a function having an address of the reception account and the information about a total number of shards as parameters.

The transaction processing module 232 may process a transaction between any two accounts. The transaction processing module 232 may process an intra-shard transaction when any two accounts belong to the same working shard, and an inter-shard transaction when any two accounts belong to different working shards. In this case, an account requesting the transaction may be called a transmission account, an account receiving the transaction request may be called a reception account, a node configured to manage the transmission account may be called a transmission node, and a node configured to manage the reception account may be called a reception node. In addition, nodes having the home shard of the reception account as the working shard may be called nodes belonging to a home shard. In addition, a working shard to which the transmission node (that is, the transmission account) belongs may be called a transmission shard, and a working shard to which the reception node (that is, the reception account) belongs may be called a reception shard.

The transaction verification module 234 may verify whether the transaction processed by the transaction processing module 232 is a legitimate transaction in the reception node and the nodes belonging to the same working shard as the reception node (hereinafter referred to as "nodes belonging to a reception shard"), and may verify whether the transaction has been normally processed in the reception node, in the transmission node and the nodes belonging to the same working shard as the transmission node (hereinafter referred to as "nodes belonging to transmission shard". The transaction verification module 234 may verify the legitimacy of the transaction based on the round state chain for the intra-shard transaction in which the transmission node and the reception node belong to the same working shard. The transaction verification module 234 may verify the legitimacy of the transaction based on the world round state chain for the inter-shard transaction in which the transmission node and the reception node do not belong to the same working shard.

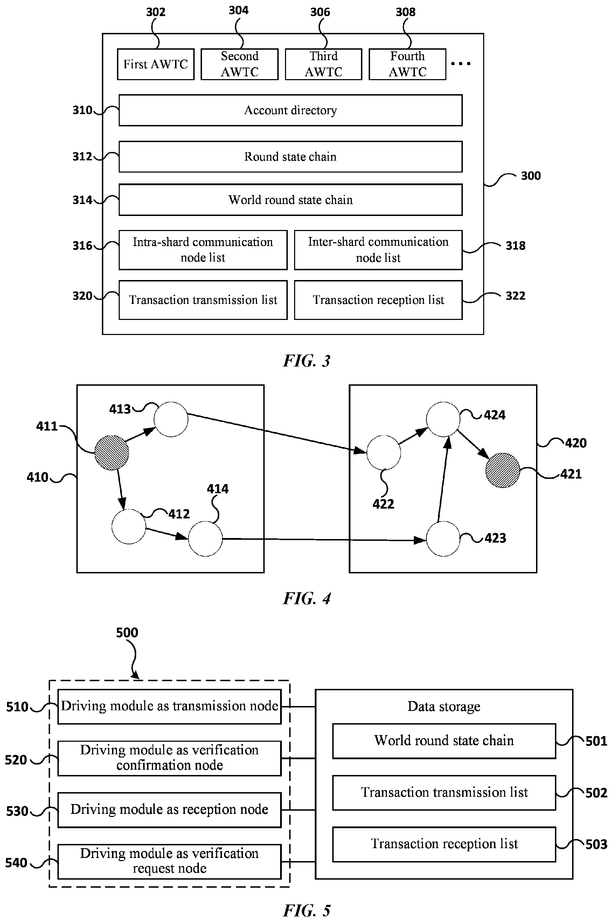

FIG. 3 is a diagram illustrating information stored in a data storage 300 of each node to implement the inter-shard transaction system capable of performing verification of the present invention.

The data storage 300 of the node may include account-wise transaction chains (AWTCs) 302, 304, 306, and 308 of all the accounts belonging to the working shard of the node, an account directory 310 that stores working shard history information of accounts having the working shard of the node as their home shard, a round state chain 312 that combines account-wise transactions of all the accounts belonging to the working shard and stores round state blocks agreed upon between the nodes belonging to the working shard as a chain, a world round state chain 314 that combines all round state blocks belonging to the blockchain network and stores the agreed world round state blocks as a chain, an intra-shard communication node list 316 that stores communication target node information within the working shard of the node, an inter-shard communication node list 318 that stores communication target node information outside the working shard of the node, a transaction transmission list 320 that stores the transaction information transmitted by the node, and a transaction reception list 322 that stores the transaction information received by the node.

The account directory 310 stores the working shard history information of the accounts having the working shard of the node as their home shard. In this example, it is assumed for convenience that each node manages only one account, that is, a host account. Therefore, in this example, the node may have the same concept as the account. For example, in the example of FIG. 1, when the home shard of the account belonging to the node 111 is the second shard 120, the first shard 110 information is stored as the working shard information of the account belonging to the node 111 in the account directories of the node 121 and the node 122 having the second shard 120 as the working shard. Meanwhile, in the example of FIG. 1, when the home shard of the account belonging to the node 112 is the third shard 130, the first shard 110 information is stored as the working shard information of the account belonging to the node 112 in the account directories of the node 131 and the node 132 having the third shard as the working shard.

As described above, the nodes and the accounts may change the working shard. When the working shard is changed in this way, information about the changed working shard may be updated in the nodes belonging to the home shard of the account. It is preferable for a latest working shard address of any account to be updated in the account directories of the nodes having the home shard of the account as the working shard.

The round state block is stored as a chain in the round state chain 312. The transaction consensus module 228 selects the consensus target transaction from among the account-wise transaction chains (AWTCs) of all the accounts belonging to the same working shard, combines the selected consensus target transactions into a round state block, agrees upon the combined round state block based on the Byzantine fault tolerance (BFT) consensus algorithm, and stores the agreed round state block in the round state chain 312. This agreed round state block is shared with the nodes belonging to the same working shard. Here, the consensus target transaction may be a new transaction that has not been generated as a round state block until the previous round.

The world round state block is stored as a chain in the world round state chain 314. The transaction consensus module 228 may select a consensus target round state block among all the round state blocks agreed upon in all the working shards in the blockchain network, combine the selected consensus target round state block into the world round state block, agree upon the combined world round state block based on the Byzantine fault-tolerance consensus algorithm, and manage the agreed world round state block as the world round state chain 314. The agreed world round state block is shared with all the nodes in the blockchain network. Here, the consensus target round state block may be a new round state block that has not been generated as a world round state block until a previous round.

The plurality of world round state blocks agreed upon in all the working shards are connected to the world round state chain 314 and managed, each world round state block includes the round state blocks agreed upon in the respective working shards, each round state block includes a transaction chain of all accounts in the working shard agreed upon in any one working shard, and the transaction chain of the respective accounts includes transaction information executed in the respective accounts.

The transaction transmission list 320 is managed by the transmission node and the nodes belonging to the transmission shard, and the transaction transmission list 320 stores the transaction information transmitted by the transmission node. The transaction reception list 322 is managed by the reception node and the nodes belonging to the reception shard, and the transaction reception list 322 stores the transaction information received by the reception node.

FIG. 4 is a diagram illustrating an example of a blockchain network in which the verifiable inter-shard transaction of the present invention is implemented.

In the present invention, the "transaction" is a unit of information that is added to a blockchain, which may be issued by one account alone, and the content of the transaction may be any information or meaningful message provided by a user. The inter-shard transaction refers to a transaction between the transmission account and the reception account when the transmission account and the reception account belong to different working shards.

That is, the inter-shard transaction is a transaction in which a transmission shard 410 to which a transmission node 411 managing the transmission account belongs and a reception shard 420 to which a reception node 421 managing the reception account belongs are different.

A transaction generated in the transmission shard 410 is transferred to the reception node 421 through nodes 412, 413, and 414 belonging to transmission shard and nodes 422, 423, and 424 belonging to the reception shard. In this case, the transmission node 411 and the nodes 412, 413, and 414 belonging to the transmission shard may each add the transaction to the transaction transmission list and manage the transaction, and the reception node 421 and the nodes 422, 423, and 424 belonging to the reception shard may each add the transaction to the transaction reception list and manage the transaction. At least one of the nodes 412, 413, and 414 belonging to the transmission shard may function as a verification confirmation node, and at least one of the nodes 422, 423, and 424 belonging to the reception shard may function as a verification request node.

The transaction is included in the round state block and shared with the transmission node 411 and the nodes 412, 413, and 414 belonging to the transmission shard, and is included in the world round state block and shared with the transmission node 411 and the nodes 412, 413, and 414 belonging to the transmission shard, as well as the reception node 421 and the nodes 422, 423, and 424 belonging to the reception shard.

The transmission node 411 may generate information for verifying the transaction in the world round state block and transmit the information to the reception node 421 and the nodes 422, 423, and 424 belonging to the reception shard through the nodes 412, 413, and 414 belonging to the transmission shard. Then, the reception node 421 and the nodes 422, 423, and 424 belonging to the reception shard may verify the transaction based on the received verification information.

However, when the verification information for the transaction is not received from the transmission node 411, any verification request node (for example, 424) among the nodes 422, 423, and 424 belonging to the reception shard may request the inter-shard communication nodes 413 and 414 of the transmission shard 410 to verify the transaction through the inter-shard communication nodes 422 and 423 in the reception shard 420. Then, any inter-shard communication nodes (for example, 413 and 414) in the transmission shard 410 may generate information for verifying the transaction in the world round state block and transmit the information to the reception node 421 and the nodes 422, 423, and 424 belonging to the reception shard. In this case, the verification confirmation nodes 413 and 414 of the transmission shard 410 may be inter-shard communication nodes that can communicate with the reception shard 420.

When the verification information for the transaction is received from the verification confirmation nodes 413 and 414 of the transmission shard 410, the reception node 421 and the nodes 422, 423, and 424 belonging to the reception shard may verify the transaction based on the received verification information.

FIG. 5 is a configuration diagram illustrating an inter-shard transaction system capable of performing verification according to an embodiment of the present invention. This inter-shard transaction system capable of performing verification may be implemented by a computer system of a node.

Each node may operate as the transmission node or the reception node and may operate as a verification request node or a verification confirmation node, in some cases, in the verifiable inter-shard transaction. When the node belongs to the transmission shard, the node may operate as the transmission node or the verification confirmation node, and when the node belongs to the reception shard, the node may operate as the reception node and the verification request node. The transmission node requests the reception node to process a transaction. The verification request node of the reception shard may request verification of the transaction, and the verification confirmation node of the transmission shard may generate verification information for the transaction and transmit the verification information to the reception shard.

The nodes that are not transmission nodes or verification confirmation nodes among the nodes belonging to the transmission shard may each manage the transaction transmission list based on data shared for the transaction, and the nodes that are not reception nodes or verification request nodes among the nodes belonging to the reception shard may each verify the received transaction and manage the transaction reception list based on the data shared for the transaction.

In order to implement the inter-shard transaction system capable of performing verification of the present invention, the data storage of the node may include a world round state chain 501 in which the plurality of world round state blocks agreed upon in all the working shards are connected as a chain, a transaction transmission list 502 in which the transmission node or the nodes belonging to the transmission shard store transmission transaction information, and a transaction reception list 503 in which the reception node or nodes belonging to the reception shard store reception transaction information.

The inter-shard transaction system capable of performing verification 500 of each node may include a driving module 510 serving as a transmission node, a driving module 520 serving as a verification confirmation node, a driving module 530 serving as a reception node, and a driving module 540 serving as a verification request node. It is assumed that the node processes a first transaction between a first transmission account and a first reception account, a second transaction between a second transmission account and a second reception account, a third transaction between a third transmission account and a third reception account, and a fourth transaction between a fourth transmission account and a fourth reception account.

That is, it is assumed that the node functions as a transmission node in first transaction processing (the driving module 510 serving as a transmission node operates), functions as a verification confirmation node in second transaction processing (the driving module 520 serving as a verification node operates), functions as the reception node in third transaction processing (the driving module 530 serving as the reception node operates), and functions as a verification request node in fourth transaction processing (the driving module 540 serving as a verification request node operates).

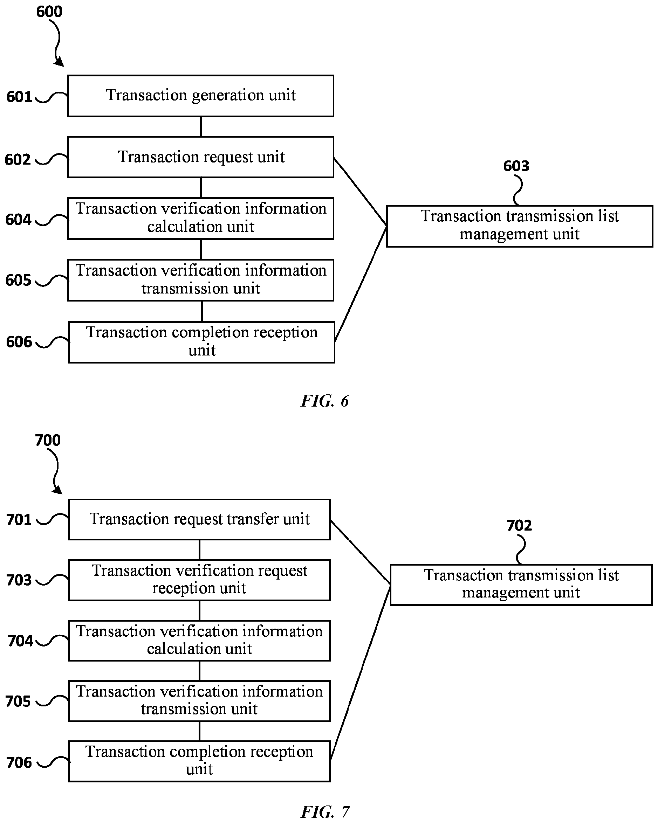

FIG. 6 is a block diagram illustrating a driving module 500 as a transmission node of the present invention. Here, the node may be the same as the transmission node 411 of FIG. 4.

The driving module 600 as a transmission node includes a transaction generation unit 601 that generates a first transaction between a first transmission account and a first reception account, a transaction request unit 602 that requests the first transaction from a first reception node that manages the first reception account, a transaction transmission list management unit 603 that records and manages first transaction information in the transaction transmission list 502, a transaction verification information calculation unit 604 that generates transaction verification information for verifying the first transaction in the world round state chain 501 that includes information about the first transaction, a transaction verification information transmission unit 605 that transmits the generated first transaction verification information to a node belonging to a reception shard of the first transaction, and a transaction completion reception unit 606 that receives a first transaction completion message from the node belonging to the reception shard of the first transaction.

The transaction transmission list management unit 603 may complete the first transaction in the transaction transmission list 502 based on the first transaction completion message.

The transaction request unit 602 may acquire the home shard information of the first reception account through the home shard calculation module, acquire the working shard information of the first reception account from the node belonging to the home shard of the first reception account, and request the first transaction from the first reception node based on the working shard information of the first reception account. The home shard calculation module may calculate the home shard information of the first reception account based on address information of the first reception account and the information about a total number of shards.

The node belonging to the home shard of the first reception account may store the working shard information of the first reception account in the account directory and provide the working shard information of the first reception account to the transaction request unit 602.

FIG. 7 is a block diagram illustrating a driving module 700 serving as a verification confirmation node of the present invention. Here, the node may be one of the nodes 412, 413, and 414 belonging to the transmission shard of FIG. 4.

The driving module 700 serving as a verification confirmation node may include a transaction transmission list management unit 702 that records and manages second transaction information in the transaction transmission list 502, a transaction verification request reception unit 703 that receives a verification request for the second transaction from the node belonging to the reception shard of the second transaction, a transaction verification information calculation unit 704 that generates transaction verification information for verifying the second transaction in the world round state chain 501 including information for the second transaction, a transaction verification information transmission unit 705 that transmits calculated second transaction verification information to the node belonging to the reception shard of the second transaction, and a transaction completion reception unit 706 that receives a second transaction completion message from the node belonging to the reception shard of the second transaction.

The driving module 700 serving as a verification confirmation node may further include a transaction request transfer unit 701 that transfers the second transaction. The second transaction may be transferred through the verification confirmation node, or may be transferred through other nodes in the transmission shard without passing through the verification confirmation node.

The transaction transmission list management unit 702 may complete the second transaction in the transaction transmission list 502 based on the second transaction completion message.

The transaction verification information calculation unit 603 of FIG. 6 and the transaction verification information calculation unit 704 of FIG. 7 may be the same component. Since the transmission node and the verification confirmation node belong to the same shard and share all pieces of transaction information, the verification confirmation node may generate the verification information for the transaction of the transmission node. The transaction verification information transmission unit 604 of FIG. 6 and the transaction verification information transmission unit 704 of FIG. 7 may be the same component. In addition, the transaction completion reception unit 605 of FIG. 6 and the transaction completion reception unit 706 of FIG. 7 may be the same component, and the transaction transmission list management unit 603 of FIG. 6 and the transaction transmission list management unit 702 of FIG. 7 may be the same component.

In addition, the nodes other than the transmission node and the verification confirmation node among the nodes belonging to the transmission shard may include a transaction request transfer unit, a transaction completion reception unit, and a transaction transmission list management unit. The corresponding transaction is transferred by the transaction request transfer unit, the corresponding transaction information is added to the transaction transmission list, and when the corresponding transaction completion message is received by the transaction completion reception unit, the transaction is completed in the transaction transmission list.

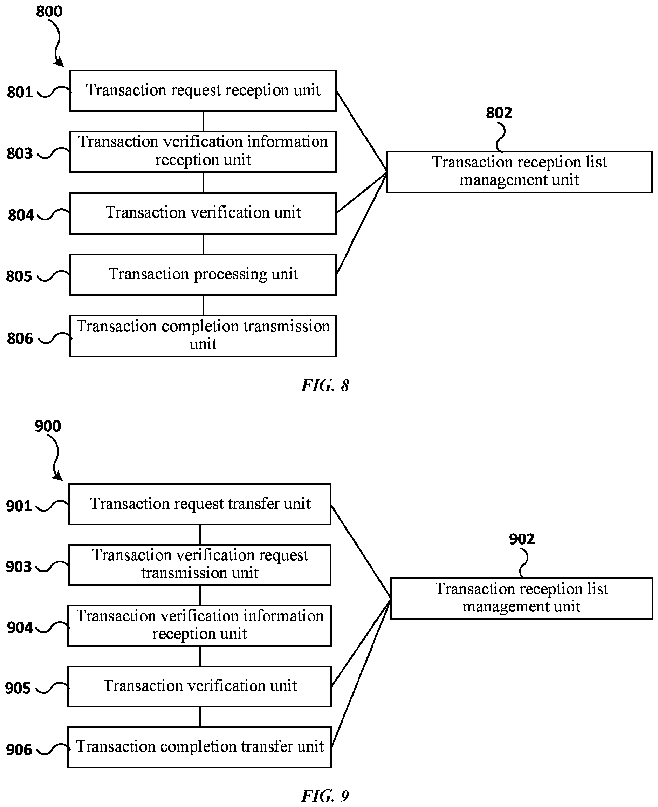

FIG. 8 is a configuration block diagram illustrating a driving module 800 as the reception node of the present invention. Here, the node may be the reception node 421 of FIG. 4.

The driving module 800 as the reception node further includes a transaction request reception unit 801 that receives a request for the third transaction between the third transmission account and the third reception account, a transaction reception list management unit 802 that records and manages third transaction information in the transaction reception list 503, a transaction verification information reception unit 803 that receives verification information for the third transaction from the node belonging to the transmission shard of the third transaction, a transaction verification unit 804 that applies the verification information for the third transaction to the world round state chain 501 to verify the third transaction, a transaction processing unit 805 that registers the verified third transaction in the transaction chain of the third reception account, and a transaction completion transmission unit 806 that transmits a third transaction completion message for the third transaction registered in the transaction chain to the node belonging to the transmission shard of the third transaction.

The transaction reception list management unit 802 changes status information of the third transaction recorded in the transaction reception list 503 when the transaction verification unit 804 completes verification of the third transaction or the transaction processing unit 805 registers the third transaction in the transaction chain. For example, when the third transaction is requested, the transaction reception list management unit 802 records the third transaction information in the transaction reception list, marks the status of the third transaction as "arrived", changes the status of the third transaction to "confirmed" when the transaction verification unit 804 completes the verification, and changes the status of the third transaction to "activate" when the transaction processing unit 805 completes chain registration.

The verification information for the third transaction received by the transaction verification information reception unit 803 may be received through a transmission node that manages the third transmission account, or may be received through a verification confirmation node of the third transmission shard.

FIG. 9 is a configuration block diagram illustrating a driving module 900 as a verification request node of the present invention. Here, the node may be one of the nodes 422, 423, and 424 belonging to the reception shard of FIG. 4.

The driving module 900 as a verification request node includes a transaction reception list management unit 902 that records and manages the fourth transaction information in the transaction reception list 503, a transaction verification request transmission unit 903 that requests the node belonging to the transmission shard of the fourth transaction to verify the fourth transaction when the verification information for the fourth transaction is not received, a transaction verification information reception unit 904 that receives the verification information for the fourth transaction from the node belonging to the transmission shard of the fourth transaction, a transaction verification unit 905 that applies the verification information for the fourth transaction to the world round state chain 501 to verify the fourth transaction, and a transaction completion transfer unit 906 that receives a fourth transaction completion message from the reception node and transmits the fourth transaction completion message to the node belonging to the transmission shard of the fourth transaction.

The driving module 900 as a verification request node may further include a transaction request transfer unit 901 that transfers the fourth transaction between the fourth transmission account and the fourth reception account. The fourth transaction may be transferred through the verification request node or may be transferred through other nodes in the reception shard without passing through the verification request node.

The transaction reception list management unit 902 changes status information of the fourth transaction recorded in the transaction reception list 503 when the transaction verification unit 905 completes verification of the fourth transaction or the transaction completion transfer unit 906 receives the fourth transaction completion message. For example, when a fourth transaction request is transferred, the transaction reception list management unit 902 records the fourth transaction information in the transaction reception list, marks the status of the third transaction as "arrived", changes the status of the fourth transaction to "confirmed" when the transaction verification unit 905 completes the verification, and changes the status of the fourth transaction to "activated" when the transaction completion transfer unit 906 receives the fourth transaction completion message.

The transaction verification information reception unit 803 of FIG. 8 and the transaction verification information reception unit 904 of FIG. 9 may be the same component. The transaction verification unit 804 of FIG. 8 and the transaction verification unit 905 of FIG. 9 may be the same component. Since the reception node and the verification request node both share the same world round state chain, all the nodes belonging to the reception shard may verify the transaction using their own world round state chain. In addition, the transaction reception list management unit 802 of FIG. 8 and the transaction reception list management unit 902 of FIG. 9 may be the same component.

In addition, among the nodes belonging to the reception shard, nodes other than the reception node and the verification request node may include the transaction request transfer unit, the transaction verification information reception unit, the transaction verification unit, the transaction completion transfer unit, and the transaction reception list management unit. The transaction is transferred by the transaction request transfer unit, the transaction information is added to the transaction reception list, the status of the transaction is marked as "arrived", the status of the transaction is changed to "confirmed" when the transaction is verified by the transaction verification unit, and the status of the transaction is changed to "activated" when the transaction completion message is received by the transaction completion transfer unit.

For the first transaction between the first transmission account and the first reception account, when the node is a transmission node that manages the first transmission account, the node drives the driving modules 510 and 600 as transmission nodes for verifiable transaction processing. The operation of each component of the driving module 600 as the transmission node will be described.

The transaction generation unit 601 generates the first transaction between the first transmission account and the first reception account. Here, the first transmission account and the first reception account belong to different working shards, and the first transaction may be an inter-shard transaction.

The transaction request unit 602 requests the first transaction from the first reception node of the first transaction, and the transaction transmission list management unit 603 records the first transaction information in the transaction transmission list 502. The request for the first transaction may be transferred to the first reception node through peer-to-peer communication via nodes belonging to a number of shards in the blockchain network. Since the transmission node configured to manage the first transmission account and the first reception node configured to manage the first reception account do not share the account-wise transaction chain (AWTC) of the account, the first reception node cannot immediately know whether the first transaction is a legitimate transaction. When the first reception node processes the first transaction in a case in which the first transaction is not a legitimate transaction, the transaction reliability of the blockchain network is degraded. For this reason, in the present invention, a process of verifying the legitimacy of the first transaction is performed.

As described above, the plurality of world round state blocks agreed upon in all the working shards are connected to the world round state chain 501 and managed, each world round state block includes the round state blocks agreed upon in the respective working shards, each round state block includes a transaction chain of all accounts in each working shard, and the transaction chain of each account includes the transaction information executed in each account. In addition, the world round state chain is shared by all the nodes constituting the blockchain network. Accordingly, the transaction chain of the transmission account including the first transaction information is included in the round state block, the round state block is included in the world round state block, and the world round state block is included in the world round state chain and shared, and in this case, the first transaction information can be verified through the world round state block, the round state block, and the transaction chain of the transmission account from the world round state chain.

As described above, when the first transaction is registered in the world round state chain, the transaction verification information calculation unit 604 calculates the transaction verification information for verifying the first transaction in the world round state chain 501 including the information about the first transaction, and the transaction verification information transmission unit 605 transmits the generated first transaction verification information to the first reception node.

When the transaction verification completion reception unit 606 receives the first transaction completion message from the first reception node, the transaction transmission list management unit 603 completes the first transaction in the transaction transmission list 502.

When the transaction verification information transmission unit 605 does not receive the first transaction completion message from the first reception node until a certain period of time has elapsed after transmitting the first transaction verification information to the first reception node, the transaction verification information transmission unit 605 may retransmit the first transaction verification information.

The transaction request unit 602 may acquire the home shard information of the first reception account through the home shard output module, acquire the working shard information of the first reception account from the node belonging to the home shard of the first reception account, and request the first transaction from the first reception node based on the working shard information of the first reception account.

For the second transaction between the second transmission account and the second reception account, when the node is a verification confirmation node belonging to the transmission shard, the node drives the driving modules 520 and 700 serving as verification confirmation nodes for verifiable transaction processing. The operation of each component of the driving module 700 serving as a verification confirmation node will be described below.

The transaction request transfer unit 701 may transfer the second transaction between the second transmission account and the second reception account. In some cases, the transaction request transfer unit 701 may receive and not transfer the second transaction. The transaction transmission list management unit 702 records the second transaction information in the transaction transmission list 502. When the node belonging to the reception shard of the second transaction does not receive verification information for the second transaction for a certain period of time, the node requests verification information for the second transaction.

In this case, the transaction verification request reception unit 703 calculates the second transaction verification information for verifying the second transaction in the world round state chain 501 including the information for the second transaction, and the transaction verification information transmission unit 705 transmits the calculated second transaction verification information to the node belonging to the reception shard of the second transaction.

When the transaction verification completion reception unit 706 receives the second transaction completion message from the node belonging to the reception shard of the second transaction, the transaction transmission list management unit 702 completes the second transaction in the transaction transmission list 502.

The transaction verification information transmission unit 705 may retransmit the second transaction verification information when the second transaction completion message is not received until a certain period of time has elapsed after transmitting the second transaction verification information to the node belonging to the reception shard of the second transaction.

For the third transaction between the third transmission account and the third reception account, when the node is a reception node that manages the third reception account, the node drives the driving modules 530 and 800 serving as the reception nodes for verifiable transaction processing. The operation of each component of the driving module 800 serving as the reception node will be described.

The transaction request reception unit 801 receives the request for the third transaction between the third transmission account and the third reception account, and the transaction reception list management unit 802 adds the third transaction information to the transaction reception list and marks the status of the third transaction as "arrived". The third transmission node may be a node that manages the third transmission account. This third transaction request may be transferred through peer-to-peer communication via the nodes belonging to the number of shards in the blockchain network. The third transmission account and the third reception account may belong to different working shards, and the third transaction may be an inter-shard transaction.

The transaction verification information reception unit 803 receives third transaction verification information from the third transmission node. This third transaction verification information may be information that enables verification of the third transaction information from the world round state chain 501. Therefore, it is preferable for the world round state block including the third transaction information to be shared and stored in the world round state chain 501 before the third transaction verification information is received.

The transaction verification unit 804 applies the third transaction verification information to the world round state chain 501 to verify the third transaction, and when the third transaction verification is completed, the transaction reception list management unit 802 changes the status of the third transaction to "confirmed" in the transaction reception list.

The transaction processing unit 805 registers the verified third transaction in the transaction chain of the third reception account, and the transaction reception list management unit 802 changes the status of the third transaction to "activated" in the transaction reception list.

The transaction verification completion transmission unit 806 generates a third transaction completion message for the third transaction that has been verified and registered in the transaction chain and sends the third transaction completion message to the third transmission node.

For the fourth transaction between the fourth transmission account and the fourth reception account, when the node is a verification request node belonging to the reception shard, the node drives the driving modules 540 and 900 serving as verification request nodes for verifiable transaction processing. The operation of each component of the driving module 900 serving as a verification request node will be described.

The transaction request transfer unit 901 may transfer the fourth transaction between the fourth transmission account and the fourth reception account. In some cases, the transaction request transfer unit 901 may receive the fourth transaction and may not transfer the fourth transaction. The transaction reception list management unit 902 records the fourth transaction information in the transaction reception list 503 and records the status of the fourth transaction as "arrived".

The transaction verification request transmission unit 903 requests the verification information for the fourth transaction from the node belonging to the transmission shard of the fourth transaction when the verification information for the fourth transaction is not received for a certain period of time.

The transaction verification information reception unit 904 receives the verification information for the fourth transaction from the node belonging to the transmission shard of the fourth transaction. This fourth transaction verification information may be information that enables the fourth transaction to be verified from the world round state chain 501.

The transaction verification unit 905 applies the verification information for the fourth transaction to the world round state chain 501 to verify the fourth transaction, and when the verification of the fourth transaction is completed, the transaction reception list management unit 902 changes the status of the fourth transaction to "confirmed" in the transaction reception list.

Thereafter, when the fourth transaction is registered in the transaction chain and a transaction completion message is transmitted from the reception node of the fourth transaction, the transaction completion transfer unit 906 transfers the transaction completion message to the node belonging to the transmission shard of the fourth transaction, and the transaction reception list management unit 902 changes the status of the fourth transaction to "activated" in the transaction reception list.

In the inter-shard transaction verification method of the present invention, the transaction verification information calculated by the transmission node may be transferred to the reception node and the nodes belonging to the reception shard, and the transaction verification information calculated by the verification confirmation node may be transferred to the reception node and the nodes belonging to the reception shard in response to a request from the verification request node.

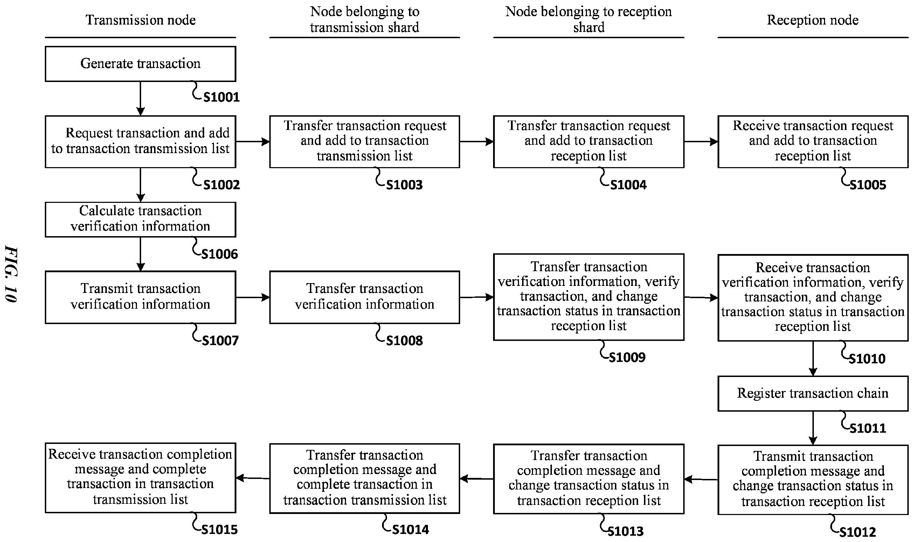

FIG. 10 is a flowchart illustrating an inter-shard transaction method capable of performing verification according to a first embodiment of the present invention. The inter-shard transaction method of the first embodiment of the present invention includes transferring transaction verification information calculated by the transmission node to the reception node and the nodes belonging to the reception shard. The inter-shard transaction method according to the first embodiment of the present invention does not require separate verification request nodes and verification confirmation nodes.

The operation of the exemplary process will be illustrated as individual blocks and will be described with reference to these blocks. The process is illustrated as a logical flow of the blocks, and each block may represent one or more operations that may be implemented in hardware, software, or a combination thereof. In relation to the software, the operation represents computer-executable instructions stored on one or more computer-readable media that cause one or more processors to perform cited operations when the instructions are executed by the one or more processors. Generally, computer-executable instructions include routines, programs, objects, modules, components, data structures, performing specific functions, or implementing specific abstract data types. The order in which the operations are described should not be construed as limiting, and the operations described may be executed in any order, subdivided into multiple sub-operations, or executed in parallel.

The transmission node generates an inter-shard transaction between the transmission account and the reception account (S1001).

The transmission node requests a transaction from the reception node that manages the reception account, and records transaction information in the transaction transmission list 502 (S1002). In order to request the transaction from the reception node, the transmission node may acquire the home shard information of the reception account and acquire the working shard information of the reception account from the nodes belonging to the home shard of the reception account. The transmission node transfers a transaction request message to the communication target nodes based on the intra-shard communication node list and the inter-shard communication node list through peer-to-peer communication, and the nodes that receive the transaction request message share the transaction request message with their respective intra-shard communication nodes and inter-shard communication nodes through peer-to-peer communication. Thus, the transaction request message may be transferred to the reception node through peer-to-peer communication.

That is, the transaction request from the transmission node is transferred to the node belonging to the transmission shard, and the node belonging to the transmission shard transfers the transaction request to another node and records the corresponding transaction information in the transaction transmission list (S1003).

Through inter-shard communication between the transmission shard and the reception shard, the transaction request is transferred to the node belonging to the reception shard.

The node belonging to the reception shard transfers the transaction request to the reception node, adds the corresponding transaction information to the transaction reception list, and records the transaction status as "arrived" (S 1004).

The reception node receives the transaction request message to receive the transaction request, adds the transaction information to the transaction reception list, and records the transaction status as "arrived" (S1005).

The transmission node registers the transaction generated by the transmission account in the transaction chain, generates a round state block including the transaction chain, connects the round state block to the round state chain, and generates a world round state block including the round state block to connect it to the world round state chain. As a result, the world round state chain including the transaction information generated by the transmission account may be shared with all the nodes in the blockchain network.

Thereafter, the transmission node calculates the transaction verification information for verifying the transaction in the world round state chain including information about the transaction (S1006), and transmits the calculated transaction verification information to the reception node through peer-to-peer communication (S1007).

In this case, the node belonging to the transmission shard transfers the transaction verification information to the node belonging to the reception shard through peer-to-peer communication (S1008).

The node belonging to the reception shard receives the transaction verification information, transfers the transaction verification information to the reception node, applies the transaction verification information to the world round state chain to verify the transaction, and changes the transaction status to "confirmed" in the transaction reception list when the verification is completed (S1009).

The reception node receives the transaction verification information, applies the transaction verification information to the world round state chain to verify the transaction, and changes the transaction status to "confirmed" in the transaction reception list when the verification is completed (S1010).

The transaction verification information may be information that enables the transaction information to be verified from the world round state chain. Therefore, it is desirable for the world round state block including the transaction information to be shared with the reception node and the nodes belonging to the reception shard before the transaction verification information is received by the reception node and the nodes belonging to the reception shard so that the world round state chains of the reception node and the nodes belonging to the reception shard are updated.

The reception node registers the verified transaction in the transaction chain of the reception account (S1011), transmits a transaction completion message, and changes the transaction status to "activated" in the transaction reception list (S1012).

The reception node generates the transaction completion message for the transaction for which the verification and the chain registration are completed and transmits the transaction completion message to the transmission node through peer-to-peer communication.

The node belonging to the reception shard transmits the transaction completion message to the node belonging to the transmission shard, and changes the transaction status to "activated" in the transaction reception list (S1013).

The node belonging to the transmission shard transmits the transaction completion message to the transmission node, and completes the transaction in the transaction transmission list (S1014).

The transmission node receives the transaction completion message and completes the transaction in the transaction transmission list (S1015).

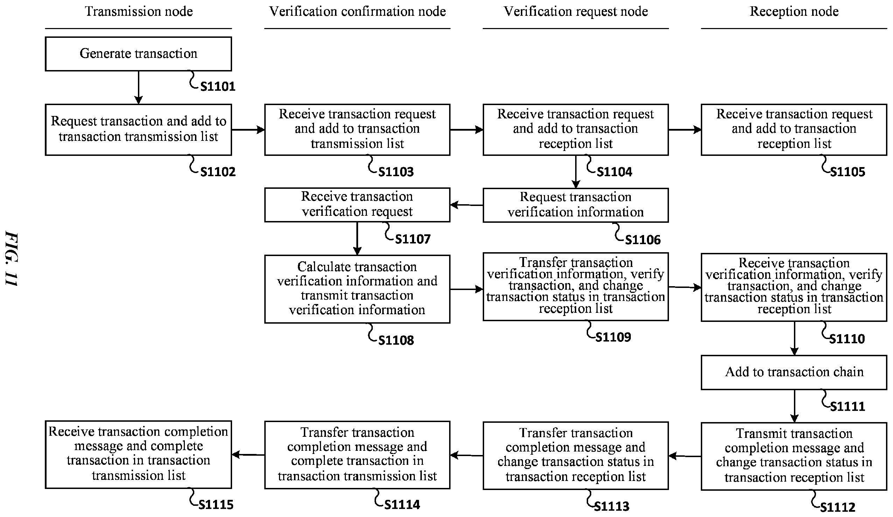

FIG. 11 is a flowchart illustrating an inter-shard transaction method capable of performing verification according to a second embodiment of the present invention. In the inter-shard transaction method of the second embodiment of the present invention, the transaction verification information calculated by the verification confirmation node is transmitted to the reception node and the nodes belonging to the reception shard.

The operations of the exemplary process are illustrated as individual blocks and are described with reference to those blocks. The process is illustrated as a logical flow of blocks, each of which may represent one or more operations that may be implemented in hardware, software, or a combination thereof. With respect to software, the operations represent computer-executable instructions stored on one or more computer-readable media that, when executed by one or more processors, cause the one or more processors to perform the operations cited. Generally, computer-executable instructions include routines, programs, objects, modules, components, data structures, performing specific functions, or implementing specific abstract data types. The order in which the operations are described should not be construed as limiting, and the operations described may be executed in any order, subdivided into multiple sub-operations, or executed in parallel.

The transmission node generates the inter-shard transaction between the transmission account and the reception account (S1101).

The transmission node requests a transaction from the reception node that manages the reception account, and records transaction information in the transaction transmission list 502 (S1102). In order to request the transaction from the reception node, the transmission node may acquire the home shard information of the reception account and acquire the working shard information of the reception account from the nodes belonging to the home shard of the reception account. The transmission node transfers the transaction request message to the communication target nodes based on the intra-shard communication node list and the inter-shard communication node list through peer-to-peer communication, and the nodes that receive the transaction request message share the transaction request message with their respective intra-shard communication nodes and inter-shard communication nodes through peer-to-peer communication. Thus, the transaction request message may be transferred to the reception node through peer-to-peer communication.

That is, the transaction request from the transmission node is transferred to the node belonging to the transmission shard including the verification confirmation node. The nodes belonging to the transmission shard transfer the transaction request through P2P communication so that the transaction request is shared with the nodes belonging to the transmission shard and the nodes belonging to the reception shard. The verification confirmation node receives the transaction request and records the corresponding transaction information in the transaction transmission list (S1103). The nodes belonging to the transmission shard each record the corresponding transaction information in the transaction transmission list while receiving the transaction request.

Through inter-shard communication between the transmission shard and the reception shard, the transaction request is transferred to the nodes belonging to the reception shard, including the verification request node.

The nodes belonging to the reception shard transfer the transaction request to the reception node or nodes belonging to another reception shard through P2P communication so that the transaction request is shared with the nodes belonging to the reception shard. The verification request node receives the transaction request, records the corresponding transaction information in the transaction reception list, and records the transaction status as "arrived" (S1104). The nodes belonging to the reception shard each add the corresponding transaction information to the transaction reception list while transferring the transaction request, and record the transaction status as "arrived".

The reception node receives the transaction request message to receive the transaction request, adds the transaction information to the transaction reception list, and records the transaction status as "arrived" (S1105).

The transmission node registers the transaction generated by the transmission account in the transaction chain, generates a round state block including the transaction chain so that the round state block is connected to the round state chain, and generates a world round state block including the round state block so that the world round state block is connected to the world round state chain. As a result, the world round state chain including the transaction information generated by the transmission account may be shared with all the nodes in the blockchain network.

When the transaction verification information is not received from the transmission node until a certain period of time has elapsed after the transaction is requested, any verification request node among the nodes belonging to the reception shard requests the transaction verification information from the node belonging to the transmission shard (S1106).

The verification confirmation node among the nodes belonging to the transmission shard that have received the request for the transaction verification information receives the transaction verification request (S1107), calculates transaction verification information for verifying the transaction in the world round state chain including the information about the transaction, and transmits the calculated transaction verification information to the verification request node through peer-to-peer communication (S1108).

The verification request node receives the transaction verification information, transfers the transaction verification information to the reception node or the nodes belonging to the reception shard, applies the transaction verification information to the world round state chain to verify the transaction, and changes the transaction status to "confirmed" in the transaction reception list when the verification is completed (S1109). Although not shown, the nodes belonging to the reception shard transfer the transaction verification information through peer-to-peer communication, apply the transaction verification information to the world round state chain to verify the transaction, and change the transaction status to "confirmed" in each transaction reception list when the verification is completed.

The reception node receives the transaction verification information, applies the transaction verification information to the world round state chain to verify the transaction, and changes the transaction status to "confirmed" in the transaction reception list when the verification is completed (S1110).

The transaction verification information may be information that enables the transaction information to be verified from the world round state chain. Therefore, it is desirable for the world round state block including the transaction information to be shared with the reception node and the nodes belonging to the reception shard before the transaction verification information is received by the reception node and the nodes belonging to the reception shard so that the world round state chains of the reception node and the nodes belonging to the reception shard are updated.

The reception node registers the verified transaction in the transaction chain of the reception account (S1111), transmits a transaction completion message, and changes the transaction status to "activated" in the transaction reception list (S1112). The reception node generates the transaction completion message for the transaction for which the verification and the chain registration are completed and transmits the transaction completion message to the transmission node through peer-to-peer communication.

The node belonging to the reception shard, including the verification request node, transfers the transaction completion message to the node belonging to the transmission shard, and changes the transaction status to "activated" in the transaction reception list (S1113).

The node belonging to the transmission shard, including the verification confirmation node, transfers the transaction completion message to the transmission node, and completes the transaction in the transaction transmission list (S1114).

The transmission node receives the transaction completion message and completes the transaction in the transaction transmission list (S1115).

All of the methods and processes described above may be implemented and fully automated as software code modules executed by one or more general-purpose computers or processors. The code modules may be stored on any type of computer readable storage medium or other computer storage device. Some or all of the methods may be implemented using specialized computer hardware.

Any routine descriptions, elements or blocks of the flowchart described herein and/or illustrated in the accompanying drawings should be understood to potentially represent code, modules, segments or portions that include one or more executable instructions for implementing a particular logical function or element. Alternative examples fall within the scope of the examples described herein, and based on the functions understood herein, elements or functions may be deleted or executed in the order in which they are illustrated or discussed, substantially synchronously or in reverse order.

Many variations and modifications may be made to the above-described embodiments, and it should be understood that each component is just one of alternative acceptable examples. All such modifications and variations are intended to be included within the scope of the present disclosure and protected by the following claims. The embodiments of the present disclosure described above may be implemented in the form of program instructions that can be executed by various computer components and recorded on a computer-readable recording medium. The computer-readable recording medium may include program instructions, data files, data structures, etc., either singly or in combination. The program instructions recorded on the computer-readable recording medium may be those specially designed and configured for the present disclosure or may be known and available to those skilled in the field of computer software. Examples of the computer-readable recording medium include magnetic media such as hard disks, floppy disks, and magnetic tapes, optical recording media such as CD-ROMs, DVDs, magneto-optical media such as floptical disks, and hardware devices specifically configured to store and execute program instructions such as ROMs, RAMs, flash memories, and the like. Examples of program instructions include not only machine language codes such as those generated by a compiler, but also high-level language codes that can be executed by a computer using an interpreter or the like. The hardware device may be configured to operate as one or more software modules to perform processing according to the present disclosure, and vice versa.

While the present disclosure has been described above with specific details such as specific components, limited embodiments and drawings, these have been provided only to help a more general understanding of the present disclosure, and the present disclosure is not limited to the above embodiments, and various modifications and variations may be made by those having ordinary skill in the art to which the present disclosure pertains.

Accordingly, the idea of the present disclosure should not be limited to the embodiments described above, and all modifications equivalent to or equivalent to the following claims as well as the claims are included in the scope of the idea of the present disclosure.

## Claims

1. An inter-shard transaction system capable of performing verification in a node configured to manage a first transmission account performing a first transaction between the first transmission account and a first reception account in a blockchain network, wherein the node includes:
a transaction generation unit configured to generate the first transaction;
a transaction request unit configured to request the first transaction from a reception node configured to manage the first reception account;
a transaction transmission list management unit configured to record and manage first transaction information in a transaction transmission list;
a transaction verification information calculation unit configured to calculate first transaction verification information for verifying the first transaction in a world round state chain including the first transaction information; and
a transaction verification information transmission unit configured to transmit the first transaction verification information to a node belonging to a reception shard of the first transaction.

2. The inter-shard transaction system capable of performing verification in a blockchain network of claim 1, wherein the node further includes a transaction completion reception unit configured to receive a transaction completion message for the first transaction,

3. The inter-shard transaction system capable of performing verification in a blockchain network of claim 2, wherein the transaction transmission list management unit completes the first transaction in the transaction transmission list based on the transaction completion message for the first transaction.

4. The inter-shard transaction system capable of performing verification in a blockchain network of claim 1, wherein the transaction request unit acquires home shard information of the first reception account, acquires working shard information of the first reception account from a node belonging to a home shard of the first reception account, and requests the first transaction from the reception node based on the working shard information of the first reception account.

5. The inter-shard transaction system capable of performing verification in a blockchain network of claim 1, wherein
the node is a verification confirmation node of a second transaction between a second transmission account and a second reception account, and
the node further includes
the transaction transmission list management unit configured to record and manage the second transaction information in the transaction transmission list,
a transaction verification request reception unit configured to receive a verification request for the second transaction from the node belonging to the reception shard of the second transaction,
the transaction verification information calculation unit configured to calculate second transaction verification information for verifying the second transaction in the world round state chain including information for the second transaction; and
the transaction verification information transmission unit configured to transmit the second transaction verification information to the node belonging to the reception shard of the second transaction.

6. The inter-shard transaction system capable of performing verification in a blockchain network of claim 5, wherein the node further includes a transaction request transfer unit configured to transmit the second transaction.

7. The inter-shard transaction system capable of performing verification in a blockchain network of claim 5, wherein the node further includes a transaction completion reception unit configured to receive a transaction completion message for the second transaction.

8. The inter-shard transaction system capable of performing verification in a blockchain network of claim 7, wherein the transaction transmission list management unit completes the second transaction in the transaction transmission list based on the transaction completion message for the second transaction.

9. The inter-shard transaction system capable of performing verification in a blockchain network of claim 1, wherein
the node is a reception node configured to manage a third reception account for performing a third transaction between a third transmission account and the third reception account, and
the node further includes
a transaction request reception unit configured to receive the third transaction request from a transmission node configured to manage the third transmission account;
a transaction reception list management unit configured to record and manage the third transaction information in a transaction reception list;
a transaction verification information reception unit configured to receive verification information for the third transaction from a node belonging to the transmission shard of the third transaction;
a transaction verification unit configured to apply the verification information for the third transaction to the world round state chain to verify the third transaction;
a transaction processing unit configured to register the verified third transaction in a transaction chain of the third reception account; and
a transaction completion transmission unit configured to transmit a third transaction completion message for the third transaction registered in the transaction chain to the node belonging to the transmission shard of the third transaction.

10. The inter-shard transaction system capable of performing verification in a blockchain network of claim 9, wherein the transaction reception list management unit changes status information of the third transaction recorded in the transaction reception list when the transaction verification unit completes verification of the third transaction or the transaction processing unit registers the third transaction in the transaction chain.

11. The inter-shard transaction system capable of performing verification in a blockchain network of claim 9, wherein
the node is a verification request node of a fourth transaction between a fourth transmission account and a fourth reception account, and
the node further includes
a transaction reception list management unit configured to record and manage the fourth transaction information in the transaction reception list;
a transaction verification request transmission unit configured to request the node belonging to the transmission shard of the fourth transaction to verify the fourth transaction;
a transaction verification information reception unit configured to receive verification information for the fourth transaction from the node belonging to the transmission shard of the fourth transaction; and
a transaction verification unit configured to apply the verification information for the fourth transaction to the world round state chain to verify the fourth transaction.

12. The inter-shard transaction system capable of performing verification in a blockchain network of claim 11, wherein the node further includes a transaction request transfer unit configured to transfer the fourth transaction.

13. The inter-shard transaction system capable of performing verification in a blockchain network of claim 11, further comprising:
a transaction completion transfer unit configured to receive a fourth transaction completion message from the reception node of the fourth transaction and transmit the fourth transaction completion message to the node belonging to the transmission shard of the fourth transaction.

14. The inter-shard transaction system capable of performing verification in a blockchain network of claim 13, wherein the transaction reception list management unit changes status information of the fourth transaction recorded in the transaction reception list when the transaction verification unit completes the verification of the fourth transaction or the transaction completion transfer unit receives the fourth transaction completion message.

15. An inter-shard transaction method capable of performing verification implemented by at least one processor in a node configured to manage a first transmission account performing a first transaction between the first transmission account and a first reception account, the inter-shard transaction method comprising:
generating, by the node, a first transaction;
requesting, by the node, the first transaction from the reception node configured to manage the first reception account;
recording and managing, by the node, first transaction information in a transaction transmission list;
calculating, by the node, first transaction verification information for verifying the first transaction in a world round state chain including the first transaction information; and
transmitting, by the node, the first transaction verification information to nodes belonging to a reception shard of the first transaction.

16. The inter-shard transaction method capable of performing verification in a blockchain network of claim 15, further comprising:
receiving, by the node, a transaction completion message for the first transaction.

17. The inter-shard transaction method capable of performing verification in a blockchain network of claim 16, further comprising:
completing, by the node, the first transaction in the transaction transmission list based on the transaction completion message for the first transaction.

18. The inter-shard transaction method capable of performing verification in a blockchain network of claim 15, wherein the requesting, by the node, for the first transaction from the reception node configured to manage the first reception account includes acquiring home shard information of the first reception account, acquiring working shard information of the first reception account from a node belonging to the home shard of the first reception account, and requesting the first transaction from the reception node based on the working shard information of the first reception account.

19. The inter-shard transaction method capable of performing verification in a blockchain network of claim 15, wherein
the node is a verification confirmation node of a second transaction between a second transmission account and a second reception account, and
the inter-shard transaction method further comprises:
recording and managing, by the node, the second transaction information in the transaction transmission list;
receiving, by the node, a verification request for the second transaction from the nodes belonging to the reception shard of the second transaction;
calculating, by the node, second transaction verification information for verifying the second transaction in the world round state chain including information for the second transaction; and
transmitting, by the node, the second transaction verification information to the nodes belonging to the reception shard of the second transaction.

20. The inter-shard transaction method capable of performing verification in a blockchain network of claim 19, further comprising:
transferring, by the node, the second transaction.

21. The inter-shard transaction method capable of performing verification in a blockchain network of claim 19, further comprising:
receiving, by the node, a transaction completion message for the second transaction.

22. The inter-shard transaction method capable of performing verification in a blockchain network of claim 21, further comprising:
completing, by the node, the second transaction in the transaction transmission list based on the transaction completion message for the second transaction.

23. The inter-shard transaction method capable of performing verification in a blockchain network of claim 15, wherein
the node is a reception node configured to manage the third reception account performing a third transaction between a third transmission account and a third reception account, and
the inter-shard transaction method further comprises:
receiving, by the node, the third transaction request from a transmission node configured to manage the third transmission account;
recording and managing, by the node, the third transaction information in the transaction reception list;
receiving, by the node, verification information for the third transaction from the node belonging to the transmission shard of the third transaction;
applying, by the node, the verification information for the third transaction to the world round state chain to verify the third transaction;
registering, by the node, the verified third transaction, in a transaction chain of the third reception account; and
transmitting, by the node, a third transaction completion message for the third transaction registered in the transaction chain to the node belonging to the transmission shard of the third transaction.

24. The inter-shard transaction method capable of performing verification in a blockchain network of claim 23, further comprising:
changing, by the node, status information of the third transaction recorded in the transaction reception list, when the verification of the third transaction is completed or the third transaction is registered in the transaction chain.

25. The inter-shard transaction method capable of performing verification in a blockchain network of claim 15, wherein
the node is a verification request node of a fourth transaction between a fourth transmission account and a fourth reception account, and
the method further comprises
recording and managing, by the node, the fourth transaction information in the transaction reception list;
requesting, by the node, the node belonging to the transmission shard of the fourth transaction to verify the fourth transaction;
receiving, by the node, verification information for the fourth transaction from the node belonging to the transmission shard of the fourth transaction; and
applying, by the node, the verification information for the fourth transaction to the world round state chain to verify the fourth transaction.

26. The inter-shard transaction method capable of performing verification in a blockchain network of claim 25, further comprising:
transferring, by the node, the fourth transaction.

27. The inter-shard transaction method capable of performing verification in a blockchain network of claim 26, further comprising:
receiving, by the node, the fourth transaction completion message from the reception node of the fourth transaction and transmitting the fourth transaction completion message to the node belonging to the transmission shard of the fourth transaction.

28. The inter-shard transaction method capable of performing verification in a blockchain network of claim 27, further comprising:
changing, by the node, status information of the fourth transaction recorded in the transaction reception list when the verification of the fourth transaction is completed or the fourth transaction completion message is received.
